# EUROPÄISCHE PATENTSCHRIFT

(11) **EP 2 507 251 B1**
(45) Veröffentlichungstag und Bekanntmachung des Hinweises auf die Patenterteilung: **18.09.2013**
(21) Anmeldenummer: 10784994.5
(22) Anmeldetag: 30.11.2010
(51) Int. Cl.: C07F 13/00, C11D 3/39, C11D 3/395, D21C 9/16, D21C 9/10, C11D 3/16

(54) **BLEICHKATALYSATOR-COMPOUNDS, VERFAHREN ZU IHRER HERSTELLUNG UND IHRE VERWENDUNG**
BLEACH CATALYST COMPOUNDS, METHOD FOR THE PRODUCTION THEREOF AND USE THEREOF
COMPOSÉS DE TYPE CATALYSEUR DE BLANCHIMENT, LEURS PROCÉDÉS DE PRÉPARATION ET LEUR UTILISATION

(30) Priorität: 05.12.2009 DE 102009057222
(43) Veröffentlichungstag der Anmeldung: 10.10.2012
(73) Patentinhaber: Clariant Finance (BVI) Limited, Road Town, Tortola (VG)
(72) Erfinder: REINHARDT, Gerd, 65779 Kelkheim (DE); BEST, Michael, 65812 Bad Soden (DE)
(74) Vertreter: Paczkowski, Marcus
(86) Internationale Anmeldenummer: PCT/EP2010/007235
(87) Internationale Veröffentlichungsnummer: WO 2011/066935

(56) Entgegenhaltungen:
- EP-A1- 1 557 457
- EP-A1- 1 621 605
- WO-A1-00/42151
- WO-A2-2008/095554
- DE-A1-102007 006 627
- DE-A1-102007 006 630
- DE-A1-102007 044 417
- JP-A- 2002 212 596
- DATABASE WPI Week 200557 Thomson Scientific, London, GB; AN 2005-558371 XP002634875, & JP 2005 206835 A (LION CORP.) 4. August 2005 (2005-08-04)

## Beschreibung

Die Erfindung betrifft Bleichkatalysator-Compounds enthaltend an sich hygroskopische Bleichkatalysatoren und organische Trägermaterialien, insbesondere Salze kurzkettiger Alkylbenzolsulfonsäuren mit weniger als 3 Kohlenstoffatomen in der Alkylkette, Verfahren zur ihrer Herstellung und ihre Verwendung als Oxidations- oder Bleichkatalysatoren, insbesondere in Wasch- oder Reinigungsmitteln.

In europäischen Pulverwaschmitteln basiert die Bleichkomponente seit langem auf Bleichmitteln, die während der Wäsche Peroxidverbindungen freisetzen. Diese stark oxidierend wirkenden Verbindungen entfernen sehr effektiv die verschiedensten Fleckenarten, wie beispielsweise von Tee, Wein und Früchten. Je nach verwendeter Peroxidverbindung, meist Perborate oder Percarbonate, betragen die zur effektiven Bleiche notwendigen Waschtemperaturen zwischen 60 und 95 °C. Bei Temperaturen unter 60 °C fällt die Wirksamkeit der Sauerstoffbleiche hingegen stark ab. Aus ökonomischen und ökologischen Gründen ist man deshalb bemüht, Verbindungen zu finden, die eine Sauerstoffbleiche auch bei niederen Temperaturen ermöglichen. Während sich zur Verbesserung der Bleichleistung von Waschmitteln an textilen Geweben bei niederen Temperaturen meist Bleichaktivatoren wie Tetraacetylethylendiamin (TAED), Nonanoyloxybenzolsulfonat-Natrium (NOBS) oder Decanoyloxybenzoesäure (DOBA) durchgesetzt haben, finden zum Reinigen harter Oberflächen, z. B. in Geschirrspülmitteln, neben Bleichaktivatoren verstärkt Bleichkatalysatoren Verwendung. Hierbei wird insbesondere eine gute Reinigungsleistung an hartnäckigen Teeanschmutzungen erwartet. In neuerer Zeit finden Bleichkatalysatoren auch in stärkerem Maße Verwendung in der Textil- und Papierbleiche sowie in der chemischen Synthese (Oxidationsreaktionen).

Bei diesen Bleichkatalysatoren handelt es sich meist um metallhaltige Verbindungen des Eisens, Cobalts oder Mangans. Einerseits sind relativ einfache Verbindungen wie Metallsalze (z. B. Manganacetate) oder Koordinationverbindungen wie Cobalt-pentaminacetate im Einsatz, andererseits sind Übergangsmetallkomplexe mit offenkettigen oder cyclischen Liganden von besonderem Interesse, da sie die Bleichleistung der einfachen Systeme um ein Vielfaches übertreffen. Aus der Reihe der letztgenannten Katalysatoren weisen insbesondere Mangan- oder Eisenkomplexe enthaltend Liganden auf Basis von Triazacyclononan und dessen Derivaten besondere bleichaktive Wirksamkeit oder hohe Oxidationskraft auf.

Beispiele für Herstellung und Anwendung solcher Metallkomplexe sind u. a. in US 2009/0126121, WO 2008/086937, US 2002/0066542, US 2001/0044402, US 2001/0025695, US 5,516,738, WO 2000/088063 und EP 0 530 870 beschrieben. Für ihre einfache Handhabung während Herstellung, Verarbeitung und Anwendung ist es in vielen Fällen erforderlich, feste, wenig hygroskopische Verbindungen einzusetzen. Hier haben sich insbesondere Bleich- und Oxidationskatalysatoren bewährt, die großvolumige Gegenionen wie Hexafluorophosphat, Perchlorat oder Tetraphenylborat enthalten. Solche Komplexe werden z. B. in EP 0 458 397, EP 0 458 398 und WO 96/06154 beschrieben.

Großvolumige Gegenionen wie Hexafluorophosphat-, Perchlorat- oder Tetrafiuoroboratanionen führen zu kristallinen Metallkomplexen, die aus dem Reaktionsgemisch ausfallen und daher auf einfache Art und Weise zu isolieren sind. Sie sind nicht hygroskopisch und lassen sich daher leicht in Wasch- und Reinigungsmittel einarbeiten, in denen sie sich durch gute Lagerstabilität auszeichnen. Allerdings sind Perchlorat-Salze potentiell explosiv, was ihre Verwendung in Konsumerprodukten weitgehend einschränkt. Hexafluorophosphate hingegen sind meist schlecht wasserlöslich, was sich in einigen Anwendungsgebieten negativ auf ihre Performance auswirkt.

US 5,274,147 offenbart, dass kleine Gegenionen wie Chlorid-, Sulfat- oder Acetatanionen zu öligen Produkten führen. Diese sind stark hygroskopisch, und werden deshalb bevorzugt in Form wässriger Lösungen eingesetzt, wie z. B. in WO 2006/125517 beschrieben.

Vorteilhaft an den letztgenannten Katalysatoren ist ihre sehr gute Wasserlöslichkeit sowie ihre einfache großtechnische Synthese. Nachteilig für ihren Einsatz in pulverförmigen oder tablettierten Wasch- und Reinigungsmitteln ist ihre starke Hygroskopizität und daraus resultierend ihre schlechte Handhabbarkeit in Pulverform, die zu Verklumpungen führt. Damit verbunden ist eine schlechte physikalische Lagerstabilität in festen oder pulverförmigen Anwendungen.

Es besteht daher Bedarf an gut wasserlöslichen, nicht oder wenig hygroskopischen Übergangsmetallkomplexen auf Basis von Mangan sowie an großtechnisch durchführbaren Verfahren zu ihrer Herstellung.

Es wurde nun überraschenderweise gefunden, dass spezielle, an sich hygroskopische Mangankomplexe mit organischen Liganden, insbesondere auf Basis von Polyazacycloalkanen wie z. B. Triazacyclononan, und kleinen Gegenionen wie z. B. Chlorid, Sulfat oder Acetat, durch in Kontakt bringen mit wie beispielsweise Mischen mit oder Aufbringen auf Salze(n) kurzkettiger Alkylbenzolsulfonsäuren, wobei die Alkylkette aus weniger als drei Kohlenstoffatomen besteht, in nicht oder nur wenig hygroskopische Compounds überführt werden können.

Im Rahmen der vorliegenden Erfindung werden unter "Compounds" bei Raumtemperatur (25 °C) feste Zusammensetzungen wie z. B. feste Mischungen verstanden. Diese liegen beispielsweise in Form von Pulvern oder Granulaten vor.

Gegenstand der vorliegenden Erfindung sind deshalb Zusammensetzungen, vorzugsweise physikalische Mischungen, in fester Form enthaltend
a) ein oder mehrere Mangankomplex-Verbindungen der allgemeinen Formel (1) 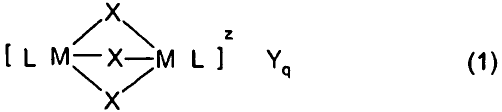 worin
   - M: unabhängig voneinander ausgewählt ist aus Mangan in der III- oder IV-Oxidationsstufe,
   - X: unabhängig voneinander eine koordinierende oder verbrückende Spezies ist, ausgewählt aus H₂O, O₂²⁻, O₂⁻, O²⁻, OH⁻, HO₂⁻ , SH⁻, S²⁻, SO, Cl⁻, N³⁻, SCN⁻, N3⁻, RCOO⁻, NH₂⁻ und NR₃, wobei R ein Radikal ausgewählt aus H, Alkyl, vorzugsweise C₁-C₄-Alkyl, und Aryl, vorzugsweise Phenyl, ist,
   - L: unabhängig voneinander organische Liganden sind, die jeweils mindestens zwei an Mangan koordinierte Stickstoffatome enthalten,
   - Z: eine ganze Zahl von -4 bis +4 ist,
   - Y: ein mono- oder multivalentes Gegenion ausgewählt aus Chlorid, Sulfat, Hydrogensulfat, Nitrat und Acetat (OAc) ist, das zur Ladungsneutralität des Komplexes führt, und
   - q: eine ganze Zahl von 1 bis 4 ist, und
b) ein oder mehrere Salze der allgemeinen Formel R'-C₆H₄-SO₃Me, worin R' CH₃ oder C₂H₅ ist und Me Na, K, Ca oder Mg bedeutet,
dadurch gekennzeichnet, dass das Mol-Verhältnis von Mangankomplex-Verbindung der allgemeinen Formel (1) zu Salz der allgemeinen Formel R'-C₆H₄-SO₃Me von 1 : 0,5 bis 1 : 5, vorzugsweise von 1 : 1 bis 1 : 2, beträgt.

Die erfindungsgemäßen Zusammensetzungen sind nicht oder nur wenig hygroskopisch und zeichnen sich u. a. durch eine vorteilhafte Lagerstabilität aus. Sie liegen bei Raumtemperatur in fester Form vor.

Als organischer Ligand L ist ein solcher bevorzugt, der einen mindestens neungliedrigen Ring darstellt, worin mindestens zwei, vorzugsweise drei oder vier, Stickstoffatome am Ring beteiligt sind und mit dem Mangan koordinieren. Als Beispiele seien genannt: 1,4,7-Triazacyclononan (TACN), 1,4,7-Trimethyl-1,4,7-triazacyclononan (1,4,7-Me₃-TACN), 1,5,9-Triazacyclododecan (TACD), 1,5,9-Trimethyl-1,5,9-triazacyclododecan (1,5,9-Me₃-TACD), 1,4,7,10-Tetrazacyclododecan (Cyclam), 1,4,7,10-Tetramethyl-1,4,7,10-tetrazacyclododecan (1,4,7,10-Me₄-Cyclam), 2-Methyl-1,4,7-trimethyl-1,4,7-triazacylononan (2-Me-1,4,7-Me₃-TACN), 2-Methyl-1,4,7-triazacyclononan (2-Me-TACN) oder 1,2-Bis-(4,7,-dimethyl-1,4,7-triazacyclonon-1-yl)-ethan (Me₄-DTNE). Besonders bevorzugt aus dieser Gruppe sind 1,4,7-Trimethyl-1,4,7-triazacyclononan (1,4,7-Me₃-TACN) und 1,2-Bis-(4,7-dimethyl-1,4,7-triazacyclonon-1-yl)-ethan (Me₄-DTNE). Insbesondere bevorzugt ist 1,4,7-Trimethyl-1,4,7-triazacyclononan (1,4,7-Me₃-TACN).

Besonders bevorzugte Mangankomplex-Verbindungen der allgemeinen Formel (1) sind

[Mn^{(IV)}₂(µ-O)₃(1,4,7-Me₃-TACN)₂]Cl₂

[Mn^{(IV)}₂(µ-O)₃(1,4,7-Me₃-TACN)₂]SO₄

[Mn^{(IV)}₂(µ-O)₃(1,4,7-(Me₃-TACN)₂]OAc₂

[Mn^{(IV)}₂(µ-O)(µ-OAc)₂(1,4,7-Me₃-TACN)₂]OAc₂

[Mn^{(IV)}Mn^{(III)}(µ-O)₃(Me₄-DTNE)]SO₄.

Unter diesen Verbindungen sind wiederum [Mn^{(IV)}₂ (µ-O)₃(1,4,7-Me₃-TACN)₂]Cl₂ (Tri-µ-oxo-bis[(1,4,7-trimethyl-1,4,7-triazacyclononan)-mangan(IV)]-dichlorid) und [Mn^{(IV)}₂(µ-O)₃(1,4,7-Me₃-TACN)₂]SO₄(Tri-µ-oxo-bis[(1,4,7-trimethyl-1,4,7-triazacyclononan)-mangan(IV)]-sulfat) bevorzugt.

Die Synthese der Mangankomplex-Verbindungen der allgemeinen Formel (1) erfolgt in an sich bekannter Weise, z. B. wie in WO 2006/125517 beschrieben. In einer bevorzugten Ausführungsform erfolgt die Umsetzung von einem zweiwertigen Mangansalz mit dem Ligand L in Wasser als Lösungsmittel zur Bildung einer Koordinationsverbindung aus dem Mangan(II)-Salz und dem Ligand L, anschließend wird die gebildete Mangan(II)-Koordinationsverbindung mit einem Oxidationsmittel oxidiert, wobei gleichzeitig ein pH-Wert von mindestens 11 und vorzugsweise mindestens 12 gehalten wird zur Überführung des Mangans von der zweiwertigen in die drei- und/oder vierwertige Stufe. Durch anschließende Zugabe einer organischen oder anorganischen Säure wird der pH-Wert auf einen Wert ≤ 9,0 eingestellt. Etwaig gebildete Manganoxide oder -hydroxide werden durch Filtration abgetrennt.

In diesem Verfahren wird ein wasserlösliches Mangan(II)-Salz, vorzugsweise aus der Gruppe der Acetate, Chloride, Nitrate und Sulfate, zum Beispiel Mangandiacetat, Mangandichlorid, Mangansulfat oder Mangannitrat mit einer Ligand-Verbindung L umgesetzt, vorzugsweise im Molverhältnis von 4 : 1 bis 1 : 2, besonders bevorzugt im Molverhältnis von 2 : 1 bis 1 : 1 und insbesondere bevorzugt im Molverhältnis von 1,5 : 1 bis 1 : 1.

Die Umsetzung des Mangan(II)-Salzes mit dem Ligand L wird in Wasser als alleinigem Lösungsmittel durchgeführt. Es wird nur soviel Wasser eingesetzt, dass pro 100 Gew.-Teile Wasser mindestes 15 Gew.-Teile Mangan(II)-Salz plus Ligandverbindung vorliegen. Die obere Grenze der Konzentration an Mangan(II)-Salz und Ligandverbindung kann sehr hoch liegen, weil diese und die weiteren Umsetzungen sowohl in Lösung als auch in Suspension (Dispersion) durchgeführt werden können. Die obere Konzentrationsgrenze ist also im Wesentlichen durch die Rührbarkeit der Reaktionsmischungen gegeben. Das Mangan(II)-Salz und der Ligand werden demnach zusammen in einer Menge von vorzugsweise 15 bis 500 Gew.-Teilen, besonders bevorzugt 20 bis 200 Gew.-Teilen, pro 100 Gew.-Teile Wasser eingesetzt. Die Umsetzung des Mangan(II)-Salzes mit dem Ligand L in Wasser wird vorzugsweise bei einer Temperatur von 10 bis 30 °C, besonders bevorzugt 15 bis 25 °C (Raumtemperatur), und Atmosphärendruck durchgeführt. Dieser Schritt führt zur Bildung einer im Lösungsmittelgemisch gelösten Koordinationsverbindung aus dem Mangan(II)-Salz und der Ligandverbindung.

Anschließend wird die Mangan(II)-Koordinationsverbindung bei einem pH-Wert von 11 bis 14, vorzugsweise 12 bis 13, oxidiert, wobei das Oxidationsmittel und die Base zur Einstellung des angegebenen pH-Wertes vorzugsweise gleichzeitig eingebracht werden. Die Oxidation wird vorzugsweise durch gleichzeitiges Einmischen eines Oxidationsmittels aus der Gruppe Luft, reiner Sauerstoff, Wasserstoffperoxid, Alkalimetallperoxid und Alkalimetallpermanganat und eines Alkalimetallhydroxids in die im Schritt a) erhaltene Lösung unter Aufrechterhaltung des angegebenen pH-Wertes durchgeführt. Bevorzugt wird die Oxidation durch Einmischen einer (vorbereiteten) Mischung bestehend aus einer 0,5 bis 35 Gew.-%igen, vorzugsweise 3 bis 20 Gew.-%igen, wässrigen Wasserstoffperoxid-Lösung und einer 5 bis 40 Gew.-%igen, vorzugsweise 10 bis 30 Gew.-%igen, wässrigen Alkalimetall- (Natrium- oder Kalium-) Hydroxidlösung durchgeführt. Was die Temperatur und den Druck betrifft, wird die Oxidation vorzugsweise bei 3 bis 15 °C, besonders bevorzugt 5 bis 10 °C, und Atmosphärendruck durchgeführt. Hierbei wird das eingesetzte zweiwertige Mangan auf die dreiwertige oder auf die bevorzugte vierwertige Stufe aufoxidiert.

Anschließend wird das Reaktionsgemisch durch Zugabe einer organischen oder anorganischen Säure, wie Essigsäure, Schwefelsäure oder Salzsäure, auf pH 5 bis 9, vorzugsweise pH 6 bis 8, eingestellt.

Die erhaltenen Mangankomplex-Verbindungen der allgemeinen Formel (1) können anschließend durch Entfernung des Wassers isoliert werden.

Eine besonders bevorzugte Alkylbenzolsulfonsäure, die dem einen oder den mehreren Salzen der allgemeinen Formel R'-C₆H₄-SO₃Me, worin R' CH₃ oder C₂H₅ ist und Me Na, K, Ca oder Mg bedeutet, zugrunde liegt, ist die Toluolsulfonsäure. Hingegen erweisen sich Mischungen derartiger ManganKomplexe mit längerkettigen Alkylbenzolsulfonaten, aber auch mit längerkettigen Alkylsulfonaten oder mit längerkettigen Alkylsulfaten, wobei "längerkettiges Alkyl" insbesondere Alkyl mit mehr als 2 Kohlenstoffatomen bedeutet, als ungeeignet zum technischen Einsatz, da sie hygroskopisch sind und während Herstellung und Verarbeitung zur Verbackung neigen und eine ungenügende Lagerstabilität aufweisen.

In einer bevorzugten Ausführungsform der Erfindung enthalten die erfindungsgemäßen Zusammensetzungen ein Salz der allgemeinen Formel R'-C₆H₄-SO₃Me, worin R'CH₃ ist und Me Na bedeutet.

In einer weiteren bevorzugten Ausführungsform der Erfindung weisen die erfindungsgemäßen Zusammensetzungen eine Gesamtmenge an der einen oder den mehreren Mangankomplex-Verbindungen der allgemeinen Formel (1) und dem einen oder den mehreren Salzen der allgemeinen Formel R'-C₆H₄-SO₃Me, worin R' CH₃ oder C₂H₅ ist und Me Na, K, Ca oder Mg bedeutet, von ≥ 70,0 Gew.-%, vorzugsweise von ≥ 75,0 Gew.-%, besonders bevorzugt von ≥ 77,0 Gew.-% und insbesondere bevorzugt von ≥ 78,0 Gew.-% auf. Die obere Grenze für die soeben angegebenen Gesamtmengen kann 100 Gew.-% betragen und ist vorzugsweise 99,9 Gew.-%. Weitere bevorzugte obere Grenzen für die soeben genannten Gesamtmengen sind, insbesondere wenn die erfindungsgemäßen Zusammensetzungen weitere Bestandteile wie z. B. anorganische Salze enthalten, 98,9 Gew.-% oder 89,9 Gew.-%.

In einer weiteren bevorzugten Ausführungsform der Erfindung enthalten die erfindungsgemäßen Zusammensetzungen ein oder mehrere anorganische Salze. Sofern die erfindungsgemäßen Zusammensetzungen ein oder mehrere anorganische Salze enthalten, sind diese vorzugsweise in einer Menge von 1 bis 25 Gew.-% und besonders bevorzugt in einer Menge von 10 bis 20 Gew.-% in den erfindungsgemäßen Zusammensetzungen enthalten. Unter den anorganischen Salzen sind Natriumchlorid und Natriumsulfat bevorzugt.

In einer weiteren bevorzugten Ausführungsform der Erfindung weisen die erfindungsgemäßen Zusammensetzungen eine Gesamtmenge an der einen oder den mehreren Mangankomplex-Verbindungen der allgemeinen Formel (1), dem einen oder den mehreren Salzen der allgemeinen Formel R'-C₆H₄-SO₃Me, worin R' CH₃ oder C₂H₅ ist und Me Na, K, Ca oder Mg bedeutet, und dem einen oder den mehreren gegebenenfalls in der Zusammensetzung enthaltenen anorganischen Salzen von ≥ 95,0 Gew.-%, besonders bevorzugt von ≥ 97,0 Gew.-% und insbesondere bevorzugt von ≥ 98,0 Gew.-% auf. Die obere Grenze für die soeben angegebenen Gesamtmengen kann 100 Gew.-% betragen. Eine bevorzugte obere Grenze für die soeben angegebenen Gesamtmengen ist 99,9 Gew.-%. Sofern die erfindungsgemäßen Zusammensetzungen keine anorganischen Salze enthalten, betreffen die soeben genannten Gesamtmengen die Summe der Mengen der einen oder der mehreren Mangankomplex-Verbindungen der allgemeinen Formel (1) und des einen oder der mehreren Salze der allgemeinen Formel R'-C₆H₄-SO₃Me, worin R'CH₃ oder C₂H₅ ist und Me Na, K, Ca oder Mg bedeutet. Sofern die erfindungsgemäßen Zusammensetzungen jedoch ein oder mehrere anorganische Salze enthalten, betreffen die soeben genannten Gesamtmengen die Summe der Mengen der einen oder der mehreren Mangankomplex-Verbindungen der allgemeinen Formel (1), des einen oder der mehreren Salze der allgemeinen Formel R'-C₆H₄-SO₃Me, worin R'CH₃ oder C₂H₅ ist und Me Na, K, Ca oder Mg bedeutet, und des einen oder der mehreren anorganischen Salze.

Vorzugsweise enthalten die erfindungsgemäßen Zusammensetzungen Wasser in einer Menge ≤ 5,0 Gew.-%. Besonders bevorzugt enthalten die erfindungsgemäßen Zusammensetzungen Wasser in einer Menge ≤ 3,0 Gew.-% und insbesondere bevorzugt in einer Menge ≤ 2,0 Gew.-%. Die erfindungsgemäßen Zusammensetzungen können wasserfrei sein. Eine bevorzugte untere Grenze für die soeben angegebenen Mengen an Wasser ist 0,1 Gew.-%.

In einer weiteren bevorzugten Ausführungsform der Erfindung bestehen die erfindungsgemäßen Zusammensetzungen aus der einen oder den mehreren Mangankomplex-Verbindungen der allgemeinen Formel (1), dem einen oder den mehreren Salzen der allgemeinen Formel R'-C₆H₄-SO₃Me, worin R' CH₃ oder C₂H₅ ist und Me Na, K, Ca oder Mg bedeutet, sowie gegebenenfalls einem oder mehreren anorganischen Salzen und gegebenenfalls Wasser in den oben genannten geringen Mengen.

In einer besonders bevorzugten Ausführungsform der Erfindung bestehen die erfindungsgemäßen Zusammensetzungen aus der einen oder den mehreren Mangankomplex-Verbindungen der allgemeinen Formel (1), dem einen oder den mehreren Salzen der allgemeinen Formel R'-C₆H₄-SO₃Me, worin R' CH₃ oder C₂H₅ ist und Me Na, K, Ca oder Mg bedeutet, und Wasser in den oben genannten geringen Mengen.

In einer weiteren besonders bevorzugten Ausführungsform der Erfindung bestehen die erfindungsgemäßen Zusammensetzungen aus der einen oder den mehreren Mangankomplex-Verbindungen der allgemeinen Formel (1), dem einen oder den mehreren Salzen der allgemeinen Formel R'-C₆H₄-SO₃Me, worin R' CH₃ oder C₂H₅ ist und Me Na, K, Ca oder Mg bedeutet, einem oder mehreren anorganischen Salzen und Wasser in den oben genannten geringen Mengen.

In einer weiteren bevorzugten Ausführungsform der Erfindung liegen die erfindungsgemäßen Zusammensetzungen in Form eines Pulvers oder Granulats vor. In einer besonders bevorzugten Ausführungsform der Erfindung liegen sie in Form eines Granulats vor. In einer insbesondere bevorzugten Ausführungsform der Erfindung sind die erfindungsgemäßen Granulate mit einer coating-Schicht umhüllt.

Die oben genannten Gesamtmengen an der einen oder den mehreren Mangankomplex-Verbindungen der allgemeinen Formel (1) und dem einen oder den mehreren Salzen der allgemeinen Formel R'-C₆H₄-SO₃Me, worin R' CH₃ oder C₂H₅ ist und Me Na, K, Ca oder Mg bedeutet, sowie die oben genannten Gesamtmengen an der einen oder den mehreren Mangankomplex-Verbindungen der allgemeinen Formel (1) und dem einen oder den mehreren Salzen der allgemeinen Formel R'-C₆H₄-SO₃Me, worin R'CH₃ oder C₂H₅ ist und Me Na, K, Ca oder Mg bedeutet, und dem einen oder den mehreren gegebenenfalls zusätzlich in den erfindungsgemäßen Zusammensetzungen enthaltenen anorganischen Salzen (sowie auch die oben genannten Mengen für die anorganischen Salze alleine) beziehen sich z. B. auf erfindungsgemäße Zusammensetzungen in nicht-granulierter Form. Sie können sich aber auch auf erfindungsgemäße Zusammensetzungen in granulierter Form beziehen, wenn diese ohne Granulierhilfsmittel wie beispielsweise Bindemittel hergestellt worden sind. Sofern jedoch Granulierhilfsmittel zur Granulierung verwendet worden sind, beziehen sich die genannten Mengen auf die Gesamtmenge der erfindungsgemäßen Zusammensetzungen abzüglich dieser Granulierhilfsmittel. In gleicher Weise sind eventuell zum Coaten von Granulaten verwendete Coatingmaterialien zu berücksichtigen. Die oben angegebenen Mengen an Wasser beziehen sich demgegenüber auf alle erfindungsgemäßen Zusammensetzungen, d. h. beispielsweise auch auf mit Hilfe von Granulierhilfsmitteln hergestellte Granulate und auf gecoatete Granulate.

Weiterer Gegenstand der vorliegenden Erfindung ist auch ein Verfahren zur Herstellung der erfindungsgemäßen Zusammensetzungen.

Die erhaltenen Mangankomplex-Verbindungen der allgemeinen Formel (1) können beispielsweise nach ihrer Herstellung und ihrem Erhalt in Wasser durch Entfernung des Wassers isoliert und unter Ausschluss von Feuchtigkeit bzw. Wasser in fester Form mit festen Alkylbenzolsulfonaten der allgemeinen Formel R'-C₆H₄-SO₃Me, worin R' CH₃ oder C₂H₅ ist und Me Na, K, Ca oder Mg bedeutet, durch inniges Vermischen in Kontakt gebracht werden.

Bevorzugt wird jedoch eine wässrige Lösung der Mangankomplex-Verbindungen der allgemeinen Formel (1) mit einem Alkylbenzolsulfonat der allgemeinen Formel R'-C₆H₄-SO₃Me, worin R' CH₃ oder C₂H₅ ist und Me Na, K, Ca oder Mg bedeutet, in Kontakt gebracht. Besonders bevorzugt ist dabei Natrium-Toluolsulfonat. Dieses in Kontakt bringen kann auf vielfältige Art und Weise geschehen.

In einer bevorzugten Ausführungsform des erfindungsgemäßen Verfahrens wird festes oder in Wasser gelöstes oder aufgeschlämmtes Alkylbenzolsulfonat der allgemeinen Formel R'-C₆H₄-SO₃Me, worin R'CH₃ oder C₂H₅ ist und Me Na, K, Ca oder Mg bedeutet, zur Lösung der Mangankomplex-Verbindung der allgemeinen Formel (1) hinzugegeben und das Gemisch anschließend durch Wasserentfernung in eine feste Form überführt. Dies kann durch standardmäßiges Eindampfen oder durch Sprühtrocknung geschehen.

In einer besonders bevorzugten Ausführungsform des erfindungsgemäßen Verfahrens wird eine wässrige Lösung der Mangankomplex-Verbindung der allgemeinen Formel (1) mit einer 30 bis 80 Gew.-%igen wässrigen Lösung oder Slurry der Alkylbenzolsulfonate der allgemeinen Formel R'-C₆H₄-SO₃Me, worin R' CH₃ oder C₂H₅ ist und Me Na, K, Ca oder Mg bedeutet, bei 5 bis 100 °C, vorzugsweise bei 15 bis 50 °C, vermischt, wobei das Molverhältnis von Mangankomplex-Verbindung der allgemeinen Formel (1) zu Alkylbenzolsulfonat von 1 : 1 bis 1 : 2 beträgt. Die Mischung kann anschließend durch Entfernung des Wassers getrocknet werden.

In einer weiteren besonders bevorzugten Ausführungsform des erfindungsgemäßen Verfahrens werden die gelösten Mangankomplex-Verbindungen der allgemeinen Formel (1) mit einer wässrigen Lösung oder Aufschlämmung der Alkylbenzolsulfonate der allgemeinen Formel R'-C₆H₄-SO₃Me, worin R' CH₃ oder C₂H₅ ist und Me Na, K, Ca oder Mg bedeutet, homogen vermischt einer Sprühtrocknung unterzogen, wobei die Gasaustrittstemperatur im Bereich von 100 °C bis 150 °C liegt. Der so erhaltene erfindungsgemäße pulverförmige Feststoff (Compound) zeichnet sich durch eine geringe Hygroskopizität aus und kann ohne weitere Vorsichtsmaßnahmen (Feuchtigkeitsausschluss) weiter verarbeitet werden.

In einer weiteren besonders bevorzugten Ausführungsform des erfindungsgemäßen Verfahrens wird eine wässrige Mischung aus Mangankomplex-Verbindung der allgemeinen Formel (1) und Alkylbenzolsulfonat der allgemeinen Formel R'-C₆H₄-SO₃Me, worin R' CH₃ oder C₂H₅ ist und Me Na, K, Ca oder Mg bedeutet, mit einer wässrigen Lösung oder Dispersion eines anorganischen Salzes, beispielsweise Na₂SO₄, homogen vermischt und einer Sprühtrocknung unterzogen, wobei die Gasaustrittstemperatur im Bereich von 100 °C bis 150 °C liegt.

Durch das oben beschriebene erfindungsgemäße Verfahren und die dadurch bewirkte Erzeugung einer erfindungsgemäßen Zusammensetzung wird eine signifikante Reduzierung der Hygroskopizität und damit eine erhebliche Verbesserung der Lagerstabilität der ansonsten stark hygroskopischen Mangankomplex-Verbindungen der allgemeinen Formel (1) erreicht.

Um die Lagerstabilität der erfindungsgemäßen Zusammensetzungen weiter zu verbessern, ist es vorteilhaft, die erfindungsgemäßen Zusammensetzungen in granulierter Form einzusetzen.

Die erfindungsgemäßen Zusammensetzungen können beispielsweise mit oder ohne Zusatz eines Binders verpresst, kompaktiert und schonend bis zu Granulatgrössen von 200 bis 2000 mµ zerkleinert werden.

Ebenso geeignet ist eine Aufbaugranulierung im Mischer, beispielsweise im Pflugscharmischer, Ringschichtmischer oder Intensivmischer unter Zusatz eines Binders, insbesondere eines wasserfreien Bindesystems, beispielsweise eines Fettalkoholpolyglykolethers oder eines Polyglykolethers wie PEG 6000.

Weiterhin können erfindungsgemäße pulverförmige Zusammensetzungen mit oder ohne Zusatz eines Binders einer Formgranulierung durch Matrizen im Extruder, aber auch durch Ringkollerpressen, Kollergänge, gegebenenfalls mit nachgeschaltetem Rondierer, unterzogen werden. In gleicher Weise kann die getrocknete Festsubstanz der oben beschriebenen Fällungsreaktion bzw. das durch Sprühtrocknung erhaltene, trockene Pulver granuliert werden.

Des Weiteren kann eine wässrige Lösung oder ein Slurry der erfindungsgemäßen Zusammensetzungen durch Wirbelschichtgranulierung in Partikelform (Granulat) überführt werden.

Zur weiteren Erhöhung der Lagerstabilität ist es vorteilhaft, die Granulate der erfindungsgemäßen Zusammensetzungen mit Coatingsubstanzen zu umhüllen.

Als Coatingmaterial geeignet sind alle filmbildenden Substanzen, vorzugsweise Wachse, Silikone, Fettsäuren, Seifen, anionische Tenside, nichtionische Tenside, kationische Tenside sowie anionische und kationische Polymere, z. B. Polyacrylsäuren. Durch Verwendung dieser Coatingmaterialien kann u. a. das Auflöseverhalten verzögert werden, um auf diese Weise auch Wechselwirkungen zwischen dem Bleichaktivator und einem Enzymsystem, das beispielsweise in einer Waschmittelformulierung enthalten sein kann, zu Beginn des Waschprozesses zu unterbinden. Soll das bestimmungsgemäße Granulat in Maschinengeschirrspülmitteln Verwendung finden, eignen sich hierzu vor allem Wachse mit Schmelzpunkten von 40 bis 50 °C.

Saure Coatingmaterialien erhöhen die Lagerstabilität der Granulate in percarbonathaltigen, hochalkalischen Formulierungen und unterdrücken Farbschäden durch Spotting. Zusätze eines Farbstoffes sind ebenfalls möglich.

Das Aufbringen der Coatingmaterialien erfolgt in der Regel durch Aufsprühen der geschmolzenen oder in einem Lösemittel gelösten Coatingmaterialien. Das Coatingmaterial wird vorzugsweise in Mengen von 0,1 bis 20 Gew.-% und besonders bevorzugt in Mengen von 1 bis 10 Gew.-%, bezogen auf das Gesamtgewicht des gecoateten Granulats, auf den Granulatkern aufgebracht.

In einer insbesondere bevorzugten Ausführungsform des erfindungsgemäßen Verfahrens wird das eine oder werden die mehreren Salze der allgemeinen Formel R'-C₆H₄-SO₃Me, worin R'CH₃ oder C₂H₅ ist und Me Na, K, Ca oder Mg bedeutet, in eine wässrige Lösung oder Dispersion enthaltend den einen oder die mehreren Mangankomplex-Verbindungen der allgemeinen Formel (1) und gegebenenfalls zusätzlich ein oder mehrere anorganische Salze gegeben, alle Bestandteile vermischt und anschließend getrocknet, und in dem Fall, dass die Zusammensetzung als gegebenenfalls gecoatetes Granulat vorliegt, schließt sich ein Granulationsschritt und gegebenenfalls ein Coatingschritt an.

Die erfindungsgemäßen Zusammensetzungen zeichnen sich durch eine gute Lagerstabilität in pulverförmigen Wasch-, Reinigungs- und Desinfektionsmittelformulierungen aus. Sie sind ideal zum Einsatz in Vollwaschmitteln, Fleckensalzen, Maschinengeschirrspülmitteln, pulverförmigen Allzweckreinigern und Gebissreinigern.

Die erfindungsgemäßen Zusammensetzungen, z. B. in der Form von Granulaten, können als Oxidationskatalysatoren insbesondere Verwendung als Bleichmittelkomponente in Wasch- und Reinigungsmitteln im Haushalt oder in gewerblichen Wäschereien finden, daneben in der Textil- und Papierbleiche sowie in industriellen Oxidationsreaktionen.

Die erfindungsgemäßen Zusammensetzungen sind nicht oder nur wenig hygroskopisch, gut lagerstabil und zeichnen sich gegenüber Hexafluorophosphat-Komplexen durch ihre bessere Wasserlöslichkeit aus. Sie eignen sich deshalb insbesondere zum Einsatz in pulverförmigen oder tablettierten Produkten wie Maschinengeschirrspülmitteln, in denen sie in Kombination mit einer Peroxidquelle wie Wasserstoffperoxid, Percarbonat oder Perboraten in wässrigen Applikationen eingesetzt werden.

Weiterer Gegenstand der vorliegenden Erfindung ist daher auch die Verwendung einer erfindungsgemäßen Zusammensetzung als Oxidations- oder Bleichkatalysator, insbesondere in Wasch- oder Reinigungsmitteln.

Die Erfindung wird im Folgenden anhand von Beispielen und Vergleichsbeispielen näher erläutert, wobei diese jedoch nicht als limitierend zu verstehen sind.

### Vergleichsbeispiel 1

39,6 g Mangandichlorid-4-hydrat (0,2 mol) werden in 110 g Wasser in einem 1-Liter-Kolben vorgelegt und mit 34,3 g 1,4,7-Trimethyl-1,4,7-triazacyclononan (0,2 mol) versetzt. Die Lösung wird abgekühlt und mit einer Mischung aus 60,3 g (0,301 mol) 20 Gew.-%iger Natronlauge und 226,7 g (0,2 mol) 3 Gew.-%iger Wasserstoffperoxid-Lösung bei 10 bis 15 °C versetzt. Nach beendeter Zugabe wird die Reaktionsmischung (pH > 12,5) mit wässriger Salzsäure auf einen pH-Wert von 6 gestellt. Die Feststoffe (Manganoxide/-hydroxide) der Reaktionsmischung werden abgesaugt und das erhaltene Filtrat vollständig eingeengt. Die Feststoffe (Manganoxide/-hydroxide) der Reaktionsmischung werden abgenutscht und das erhaltene Filtrat vollständig eingeengt. Der rotbraune Rückstand wird in Ethanol gelöst und die unlöslichen Bestandteile (z. B. Natriumchlorid) abgetrennt. Vollständiges Eindampfen des Lösemittels liefert 56,2 g (95 %) Tri-µ-oxo-bis[(1,4,7-trimethyl-1,4,7-triazacyclononan)-mangan(IV)]-dichlorid als stark hygroskopisches, rotbraunes Pulver.

Bei Lagerung in offener Schale nimmt das Produkt bei Raumtemperatur innerhalb von 24 Stunden > 17 Gew.-% Wasser auf und verflüssigt sich.

### Beispiel 1

Tri-µ-oxo-bis[(1,4,7-trimethyl-1,4,7-triazacyclononan)-mangan(IV)]-dichlorid wird analog Vergleichsbeispiel 1 hergestellt und in reiner Form als rot-braunes Pulver isoliert. 4,7 g (8 mmol) davon werden in 50 ml Wasser gelöst und mit 3,1 g (16 mmol) Toluol-4-sulfonsäure-Natriumsalz (Merck) versetzt. Es wird 1 Stunde bei Raumtemperatur nachgerührt und anschließend am Rotationsverdampfer bis zur Trockene eingeengt. Man erhält 7,8 g kristallinen violetten Feststoff, der nach 14 tägiger Lagerung bei 38 °C und 70% relativer Luftfeuchte 1,8 Gew.-% Wasser aufgenommen hat und dabei rieselfähig bleibt.

### Beispiel 2

Analog Vergleichsbeispiel 1 wird eine wässrige Lösung von 0,2 mol Tri-µ-oxo-bis[(1,4,7-trimethyl-1,4,7-triazacyclononan)-mangan(IV)]-dichlorid in Wasser hergestellt und von Manganoxiden/hydroxiden befreit. Die reaktionsbedingt enthaltenen Salze (Natriumchlorid) verbleiben in der Lösung. Bei 25 °C werden 0,4 mol (77,6 g) festes Toluol-4-sulfonsäure-Natriumsalz (Merck) hinzugegeben und 30 Minuten nachgerührt. Die klare dunkelrote Lösung wird anschließend zur Trockene eingedampft. Nach dem Trocknen im Vakuumtrockenschrank erhält man kristallinen rot-violetten Feststoff in 92,7 %iger Ausbeute, eine Mischung aus Tri-µ-oxo-bis[(1,4,7-trimethyl-1,4,7-triazacyclononan)-mangan(IV)]-dichlorid, Natrium-Toluolsulfonat und Natriumchlorid. Bei offener Lagerung nimmt dieses Produkt innerhalb von 5 Tagen ca. 2 Gew.-% Wasser auf, bleibt kristallin und rieselfähig.

### Vergleichsbeispiel 2

Es wird nach Beispiel 2 Verfahren, aber an Stelle des Toluol-4-sulfonsäure Natrium wird Cumolsulfonat-Natrium hinzugegeben (äquimolarer Austausch von Toluol-4-sulfonsäure Natrium durch Cumolsulfonat-Natrium). Nach dem Eindampfen bei 50 °C erhält man einen rotbraunen Feststoff, der nach 5 Tagen 7,1 Gew.-% Wasser aufnimmt und dabei verklumpt.

### Vergleichsbeispiel 3

4,4 g (7,5 mmol) isoliertes Tri-µ-oxo-bis[(1,4,7-trimethyl-1,4,7-triazacyclononan)-mangan(IV)]-dichlorid gemäß Vergleichsbeispiel 1 werden in 50 ml Wasser gelöst und 4,3 g (15 mmol) Dodecylsulfat-Natrium hinzugegeben. Es wird 1 Stunde bei Raumtemperatur nachgerührt und anschließend am Rotationsverdampfer bis zur Trockene eingeengt. Man erhält 8,7 g kristallinen roten Feststoff, der nach 5 tägiger Lagerung bei Raumtemperatur 8,7 Gew.-% Wasser aufnimmt und dabei verklumpt.

## Patentansprüche

1. Zusammensetzung in fester Form enthaltend
a) ein oder mehrere Mangankomplex-Verbindungen der allgemeinen Formel (1) 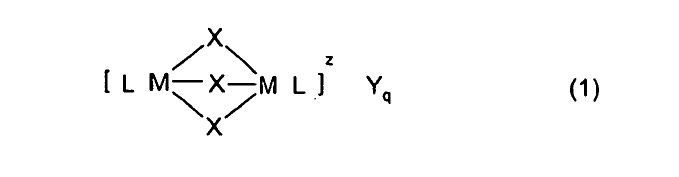 worin
M unabhängig voneinander ausgewählt ist aus Mangan in der III- oder IV-Oxidationsstufe,
X unabhängig voneinander eine koordinierende oder verbrückende Spezies ist, ausgewählt aus H₂O, O₂²⁻, O₂⁻, O²⁻, OH⁻, HO₂⁻, SH⁻, S²⁻, SO, Cl⁻, N³⁻, SCN⁻, N₃⁻, RCOO⁻, NH₂- und NR₃, wobei R ein Radikal ausgewählt aus H, Alkyl und Aryl ist,
L unabhängig voneinander organische Liganden sind, die jeweils mindestens zwei an Mangan koordinierte Stickstoffatome enthalten,
Z eine ganze Zahl von -4 bis +4 ist,
Y ein mono- oder multivalentes Gegenion ausgewählt aus Chlorid, Sulfat, Hydrogensulfat, Nitrat und Acetat ist, das zur Ladungsneutralität des Komplexes führt, und
q eine ganze Zahl von 1 bis 4 ist, und
b) ein oder mehrere Salze der allgemeinen Formel R'-C₆H₄-SO₃Me, worin R' CH₃ oder C₂H₅ ist und Me Na, K, Ca oder Mg bedeutet,
**dadurch gekennzeichnet, dass** das Mol-Verhältnis von Mangankomplex-Verbindung der allgemeinen Formel (1) zu Salz der allgemeinen Formel R'-C₆H₄-SO₃Me von 1 : 0,5 bis 1 : 5 beträgt.

2. Zusammensetzung nach Anspruch 1, **dadurch gekennzeichnet, dass** L in der einen oder den mehreren Mangankomplex-Verbindungen der allgemeinen Formel (1) ein organischer Ligand ist, der einen mindestens neungliedrigen Ring darstellt, worin mindestens zwei, vorzugsweise drei oder vier, Stickstoffatome am Ring beteiligt sind und mit dem Mangan koordinieren.

3. Zusammensetzung nach Anspruch 1 oder 2, **dadurch gekennzeichnet, dass** L in der einen oder den mehreren Mangankomplex-Verbindungen der allgemeinen Formel (1) ausgewählt ist aus 1,4,7-Trimethyl-1,4,7-triazacyclononan und 1,2-Bis-(4,7-dimethyl-1,4,7-triazacyclonon-1-yl)-ethan.

4. Zusammensetzung nach einem oder mehreren der Ansprüche 1 bis 3, **dadurch gekennzeichnet, dass** die eine oder die mehreren Mangankomplex-Verbindungen der allgemeinen Formel (1) ausgewählt sind aus den folgenden Verbindungen:
[Mn^{(IV)}₂(µ-O)₃(1,4,7-Me₃-TACN)₂]Cl₂
[Mn^{(IV)}₂(µ-O)₃(1,4,7-Me₃-TACN)₂]SO₄
[Mn^{(IV)}₂(µ-O)₃(1,4,7-Me₃-TACN)₂]OAc₂
[Mn^{(IV)}₂(µ-O)(µ-OAc)₂(1,4,7-Me₃-TACN)₂]OAc₂
[Mn^{(IV)}Mn^{(III)}(µ-O)₃(Me₄-DTNE)]SO₄.

5. Zusammensetzung nach einem oder mehreren der Ansprüche 1 bis 4, **dadurch gekennzeichnet, dass** sie ein Salz der allgemeinen Formel R'-C₆H₄-SO₃Me, worin R' CH₃ ist und Me Na bedeutet, enthält.

6. Zusammensetzung nach einem oder mehreren der Ansprüche 1 bis 5, **dadurch gekennzeichnet, dass** sie eine Gesamtmenge an der einen oder den mehreren Mangankomplex-Verbindungen der allgemeinen Formel (1) und dem einen oder den mehreren Salzen der allgemeinen Formel R'-C₆H₄-SO₃Me, worin R' CH₃ oder C₂H₅ ist und Me Na, K, Ca oder Mg bedeutet, von ≥ 70,0 Gew.-% aufweist.

7. Zusammensetzung nach einem oder mehreren der Ansprüche 1 bis 6, **dadurch gekennzeichnet, dass** sie ein oder mehrere anorganische Salze enthält.

8. Zusammensetzung nach einem oder mehreren der Ansprüche 1 bis 7, **dadurch gekennzeichnet, dass** sie Wasser in einer Menge ≤ 5,0 Gew.-% enthält.

9. Zusammensetzung nach einem oder mehreren der Ansprüche 1 bis 8, **dadurch gekennzeichnet, dass** sie in Form eines Granulats vorliegt.

10. Granulat nach Anspruch 9, **dadurch gekennzeichnet, dass** es mit einer coating-Schicht umhüllt ist.

11. Verfahren zur Herstellung einer Zusammensetzung nach einem oder mehreren der Ansprüche 1 bis 10, **dadurch gekennzeichnet, dass** das eine oder die mehreren Salze der allgemeinen Formel R'-C₆H₄-SO₃Me, worin R' CH₃ oder C₂H₅ ist und Me Na, K, Ca oder Mg bedeutet, in eine wässrige Lösung oder Dispersion enthaltend den einen oder die mehreren Mangankomplex-Verbindungen der allgemeinen Formel (1) und gegebenenfalls zusätzlich ein oder mehrere anorganische Salze gegeben werden, alle Bestandteile vermischt werden und anschließend getrocknet wird, und sich in dem Fall, dass die Zusammensetzung als gegebenenfalls gecoatetes Granulat vorliegt, ein Granulationsschritt und gegebenenfalls ein Coatingschritt anschließt.

12. Verwendung einer Zusammensetzung nach einem oder mehreren der Ansprüche 1 bis 10 als Oxidations- oder Bleichkatalysator, insbesondere in Wasch- oder Reinigungsmitteln.

## Claims

1. A composition in solid form comprising
a) one or more manganese complex compounds of the formula (1) 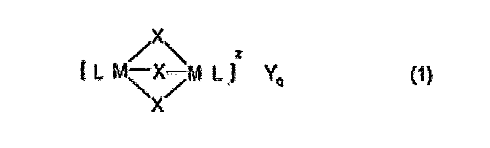 in which
M independently of the others is selected from manganese in oxidation state III or IV,
X independently of the others is a coordinating or bridging species selected from H₂O, O₂²⁻, O₂⁻, O²⁻, OH⁻, HO₂⁻, SH⁻, S²⁻, SO, CI⁻, N3⁻, SCN⁻, N₃⁻, RCOO⁻, NH₂⁻, and NR₃, where R is a radical selected from H, alkyl and aryl,
L independently of the others is organic ligands which each contain at least two nitrogen atoms coordinated to manganese,
z is an integer from -4 to +4,
Y is a monovalent or multivalent counterion selected from chloride, sulfate, hydrogen sulfate, nitrate and acetate, which leads to the charge neutrality of the complex, and
q is an integer from 1 to 4, and
b) one or more salts of the formula R'-C₆H₄-SO₃Me, in which R' is CH₃ or C₂H₅ and Me is Na, K, Ca or Mg,
wherein the molar ratio of manganese complex compound of the formula (1) to a salt of the formula R'-C₆H₄-SO₃Me is from 1:0.5 to 1:5.

2. The composition as claimed in claim 1, wherein L in the one or more manganese complex compounds of the formula (1) is an organic ligand which is an at least nine-membered ring in which at least two, preferably three or four, nitrogen atoms are involved in the ring and coordinate with the manganese.

3. The composition as claimed in claim 1 or 2, wherein L in the one or more manganese complex compounds of the formula (1) is selected from 1,4,7-trimethyl-1,4,7-triazacyclononane and 1,2-bis(4,7-dimethyl-1,4,7-triazacyclonon-1-yl)ethane.

4. The composition as claimed in one or more of claims 1 to 3, wherein the one or more manganese complex compounds of the formula (1) are selected from the following compounds:
[Mn^{(IV)}₂(µ-O)₃(1,4,7-Me₃-TACN)₂]Cl₂
Mn^{(IV)}₂ (µ-O)₃ (1,4,7-Me₃-TACN)₂]SO₄
[Mn^{(IV)}₂(µ-O)₃(1,4,7-Me₃-TACN)₂]OAc₂
[Mn^{(IV)}₂(µ-O)(µ-OAc)₂(1,4,7-Me₃-TACN)₂]OAc₂
[Mn^{(IV)}Mn^{(III)}(µ-O)₃(Me₄-DTNE)]SO₄.

5. The composition as claimed in one or more of claims 1 to 4, which comprises a salt of the formula R'-C₆H₄-SO₃Me, in which R' is CH₃ and Me is Na.

6. The composition as claimed in one or more of claims 1 to 5, which has a total content of the one or more manganese complex compounds of the formula (1) and the one or more salts of the formula R'-C₆H₄-SO₃Me, in which R' is CH₃ or C₂H₅ and Me is Na, K, Ca or Mg, of ≥ 70.0% by weight.

7. The composition as claimed in one or more of claims 1 to 6, which comprises one or more inorganic salts.

8. The composition as claimed in one or more of claims 1 to 7, which comprises water in an amount ≤ 5.0% by weight.

9. The composition as claimed in one or more of claims 1 to 8, which is present in the form of granules.

10. The granule as claimed in claim 9, which is coated with a coating layer.

11. A method for producing a composition as claimed in one or more of claims 1 to 10, which comprises adding the one or more salts of the formula R'-C₆H₄-SO₃Me, in which R' is CH₃ or C₂H₅ and Me is Na, K, Ca or Mg, to an aqueous solution or dispersion comprising the one or more manganese complex compounds of the formula (1) and optionally additionally one or more inorganic salts, mixing all of these constituents and then drying the mixture, and if the composition is in the form of optionally coated granules, following with a granulation step and optionally a coating step.

12. The use of a composition as claimed in one or more of claims 1 to 10 as oxidation or bleach catalyst, in particular in detergents or cleaners.

## Revendications

1. Composition sous forme solide, contenant
a) un ou plusieurs composés de type complexe de manganèse de formule générale (1) 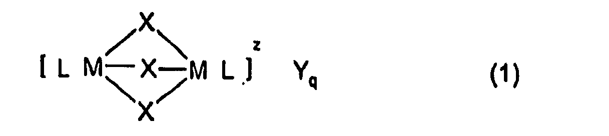 où
M est choisi, indépendamment l'un de l'autre, parmi le manganèse sous forme de l'étage d'oxydation III ou IV,
X indépendamment l'un de l'autre, est une substance coordinante ou formant un pont, choisie parmi H₂O, O₂²⁻, O₂⁻, O²⁻, OH⁻, HO₂⁻, SH⁻, S²⁻, SO, Cl⁻, N³⁻, SCN⁻, N3⁻ RCOO⁻, NH₂⁻ et NR₃, R étant un radical choisi parmi H, alkyle et aryle,
L indépendamment les uns des autres, sont des ligands organiques, qui contiennent à chaque fois au moins deux atomes d'azote coordinés au manganèse,
z vaut un nombre entier de -4 à +4,
Y représente un contre-ion monovalent ou polyvalent choisi parmi le chlorure, le sulfate, l'hydrogénosulfate, le nitrate et l'acétate, qui conduit à la neutralité de charge du complexe, et
q vaut un nombre entier de 1 à 4 et
b) un ou plusieurs sels de formule générale R'-C₆H₄-SO₃Me, où
R' représente CH₃ ou C₂H₅ et Me signifie Na, K, Ca ou Mg,
**caractérisée en ce que** le rapport molaire du composé de type complexe de manganèse de formule générale (1) au sel de formule générale R'-C₆H₄-SO₃Me vaut 1:0,5 à 1:5.

2. Composition selon la revendication 1, **caractérisée en ce que** L dans ledit un ou lesdits plusieurs composés de type complexe de manganèse de formule générale (1) est un ligand organique, qui représente un noyau au moins à neuf chaînons, dans lequel au moins deux, de préférence trois ou quatre, atomes d'azote participent au cycle et se coordinent au manganèse.

3. Composition selon la revendication 1 ou 2, **caractérisée en ce que** L dans ledit un ou lesdits plusieurs complexes de manganèse de formule générale (1) est choisi parmi le 1,4,7-triméthyl-1,4,7-triazacyclononane et le 1,2-bis-(4,7-diméthyl-1,4,7-triazacyclonon-1-yl)-éthane.

4. Composition selon l'une ou plusieurs des revendications 1 à 3, **caractérisée en ce que** ledit un ou lesdits plusieurs composés de type complexe du manganèse de formule générale (1) sont choisis parmi les composés suivants :
[Mn^{(IV)}₂(µ-O)₃(1,4,7-Me₃-TACN)₂]Cl₂
[Mn^{(IV)}₂(µ-O)₃(1,4,7-Me₃-TACN)₂]SO₄
[Mn^{(IV)}₂(µ-O)₃(1,4,7-Me₃-TACN)₂]OAc₂
[Mn^{(IV)}₂(µ-O)(µ-OAc)₂(1,4,7-Me₃-TACN)₂]OAc₂
[Mn^{(IV)}Mn^{(III)}(µ-O)₃(Me₄-DTNE)SO₄.

5. Composition selon l'une ou plusieurs des revendications 1 à 4, **caractérisée en ce qu'**elle contient un sel de formule générale R'-C₆H₄-SO₃Me, dans laquelle R' représente CH₃ et Me signifie Na.

6. Composition selon l'une ou plusieurs des revendications 1 à 5, **caractérisée en ce qu'**elle présente une quantité totale dudit un ou desdits plusieurs composés de type complexe de manganèse de formule générale (1) et dudit un ou desdits plusieurs sels de formule générale R'-C₆H₄-SO₃Me, dans laquelle R' représente CH₃ ou C₂H₅ et Me signifie Na, K, Ca ou Mg, ≥ 70,0% en poids.

7. Composition selon l'une ou plusieurs des revendications 1 à 6, **caractérisée en ce qu'**elle contient un ou plusieurs sels inorganiques.

8. Composition selon l'une ou plusieurs des revendications 1 à 7, **caractérisée en ce qu'**elle contient de l'eau en une quantité de ≤ 5,0% en poids.

9. Composition selon l'une ou plusieurs des revendications 1 à 8, **caractérisée en ce qu'**elle se trouve sous forme d'un granulat.

10. Granulat selon la revendication 9, **caractérisé en ce qu'**il est enrobé d'une couche de revêtement.

11. Procédé pour la préparation d'une composition selon l'une ou plusieurs des revendications 1 à 10, **caractérisé en ce que** ledit un ou lesdits plusieurs sels de formule générale R'-C₆H₄-SO₃Me, dans laquelle R' représente CH₃ ou C₂H₅ et Me signifie Na, K, Ca ou Mg, est/sont introduit(s) dans une solution ou une dispersion aqueuse contenant ledit un ou lesdits plusieurs composés de type complexe de manganèse de formule générale (1) et le cas échéant en plus un des plusieurs sels inorganiques, tous les constituants sont mélangés et ensuite séchés et, dans le cas où la composition se trouve sous forme d'un granulat le cas échéant revêtu, une étape de granulation et le cas échéant une étape de revêtement a/ont lieu ensuite.

12. Utilisation d'une composition selon l'une ou plusieurs des revendications 1 à 10 comme catalyseur d'oxydation ou de blanchiment, en particulier dans des agents de lavage ou de nettoyage.
